# EUROPÄISCHE PATENTSCHRIFT

(11) **EP 3 851 243 B1**
(45) Veröffentlichungstag und Bekanntmachung des Hinweises auf die Patenterteilung: **09.08.2023**
(21) Anmeldenummer: 21152028.3
(22) Anmeldetag: 18.01.2021
(51) Int. Cl.: B23Q 17/22, B23Q 17/24

(54) **VERFAHREN UNTER EINSATZ EINER VORRICHTUNG ZUM BEARBEITEN EINES WERKSTÜCKS**
METHOD USING A DEVICE FOR MACHINING A WORKPIECE
PROCÉDÉ UTILISANT UN DISPOSITIF POUR L'USINAGE D'UNE PIÈCE

(30) Priorität: 20.01.2020 DE 102020101172
(43) Veröffentlichungstag der Anmeldung: 21.07.2021
(73) Patentinhaber: HOMAG GmbH, 72296 Schopfloch (DE)
(72) Erfinder: Straub, Heiko, 72108 Rottenburg a. N. (DE); Hamann, Tim, 72280 Dornstetten (DE); Fritz, Marcus, 72280 Dornstetten (DE); Leipersberger, Stefan, 72285 Herzogsweiler (DE); Lv, Anqi, 72250 Freudenstadt (DE)
(74) Vertreter: Hoffmann Eitle

(56) Entgegenhaltungen:
- EP-A1- 3 453 503
- EP-A2- 3 473 377
- DE-A1-102017 126 786

## Beschreibung

### Technisches Gebiet

Die Erfindung betrifft ein Verfahren unter Einsatz einer Vorrichtung zum Bearbeiten eines Werkstücks, das bevorzugt zumindest abschnittsweise aus Holz, Holzwerkstoffen, Kunststoff oder dergleichen besteht, nach dem Oberbegriff des Anspruchs 1

### Stand der Technik

Bei der Bearbeitung von Werkstücken, die beispielsweise aus Holz, Holzwerkstoffen, Kunststoff oder dergleichen bestehen, ist es erforderlich, die Relativposition zwischen Bearbeitungswerkzeug und Werkstück präzise festzulegen. Zu diesem Zweck ist es üblich, Tastelemente wie etwa Tastrollen vorzusehen, die das jeweilige Werkstück berührend tasten und auf diese Weise dafür sorgen, dass das jeweilige Bearbeitungsaggregat in die für die Bearbeitung zutreffende Position gebracht wird.

Diese Vorgehensweise hat sich in der Praxis bewährt. Allerdings können durch den physischen Kontakt zwischen Tastelement und Werkstück Beschädigungen an oder Spuren auf der Oberfläche des jeweiligen Werkstücks entstehen. Darüber hinaus können strukturierte Oberflächen nur bis zu einer bestimmten Prägetiefe abgetastet werden. Bei hohen Geschwindigkeiten können darüber hinaus Qualitätseinbußen und insbesondere auch Beschädigungen der Oberfläche entstehen. Darüber hinaus ist es auch bekannt, die Relativbeziehung zwischen Bearbeitungsaggregat und Werkstück unter Einsatz berührungslos arbeitender Abstandssensoren zu bestimmen. So offenbart beispielsweise die EP 1 038 644 B1 eine gattungsgemäße Bearbeitungsvorrichtung, bei der ein optischer Sensor vorgesehen ist, der den Abstand in Bezug auf ein Werkstück misst, um auf dieser Grundlage die Relativposition eines Fräsaggregats oder Fräsers in Bezug auf das Werkstück festzulegen. Allerdings hat sich gezeigt, dass derartige Bearbeitungsvorrichtungen häufig kein ausreichend hochwertiges Bearbeitungsergebnis liefert, insbesondere bei wechselnden Glanzgraden oder Rauigkeiten der verschiedenen Werkstückoberflächen. Die DE 10 2017 126786 A1 offenbart ein Verfahren und eine Vorrichtung aus dem Stand der Technik, und bildet die Basis des Oberbegriffs vom Anspruch 1.

Weitere Vorrichtungen und Verfahren zum Bearbeiten eines Werkstücks sind außerdem aus der EP 3 453 503 A1 und der EP 3 473 377 A2 bekannt.

### Darstellung der Erfindung

Der Erfindung liegt die Aufgabe zugrunde, ein Verfahren unter Einsatz einer Vorrichtung zum Bearbeiten eines Werkstücks der eingangs genannten Art bereitzustellen, die bei einfacher Konstruktion ein qualitativ hochwertiges Bearbeitungsergebnis ermöglicht, insbesondere auch bei wechselnden Werkstückoberflächen.

Diese Aufgabe wird erfindungsgemäß durch ein Verfahren unter Einsatz einer Vorrichtung zum Bearbeiten eines Werkstücks nach Anspruch 1 gelöst. Besonders bevorzugte Weiterbildungen der Erfindung sind in den abhängigen Ansprüchen angegeben.

Der Erfindung liegt die Erkenntnis zugrunde, dass die im Stand der Technik verwendeten, berührungslosen Abstandssensoren die Erreichung des gewünschten Qualitätsniveaus behinderten. Vor diesem Hintergrund ist erfindungsgemäß vorgesehen, dass bei einer gattungsgemäßen Bearbeitungsvorrichtung der mindestens eine berührungslose Abstandssensor eingerichtet ist, den Abstand mit einer Messgenauigkeit von +/- 0,01 mm oder genauer zu messen. Alternativ oder zusätzlich ist erfindungsgemäß vorgesehen, dass der berührungslose Abstandssensor nach dem Triangulationsprinzip arbeitet.

Durch diese Maßnahmen kann einerseits eine deutlich präzisere Positionierung der jeweiligen Bearbeitungsanordnung in Bezug auf das zu bearbeitende Werkstück erreicht werden, woraus sich eine deutlich gesteigerte Bearbeitungsqualität ergibt. Dabei haben die Erfinder festgestellt, dass dieses Ergebnis Dank der erfindungsgemäßen Ausgestaltung des Abstandssensors auch bei wechselnden Werkstückoberflächen wie etwa unterschiedlichen Glanzgraden oder Rauigkeiten erzielt werden kann. Dies ist angesichts der immer vielfältiger werdenden Produktionsanforderungen von besonderer Bedeutung. Darüber hinaus besitzt die erfindungsgemäße Bearbeitungsvorrichtung auch die generellen Vorteile einer berührungslosen Abtastung, wie insbesondere die geringe Beschädigungs- und Verschmutzungsgefahr, die hohe Bearbeitungsgeschwindigkeit, die Eröffnung einer hochgradig modularen Bauweise, der geringe Wartungsaufwand und die kompakte Bauform.

Besonders ausgeprägt lassen sich diese Vorteile erzielen, wenn der Abstandssensor gemäß einer Weiterbildung der Erfindung einen Lasertriangulationssensor aufweist.

Gemäß einer Weiterbildung der Erfindung weist die Bearbeitungsvorrichtung mindestens zwei berührungslose Abstandssensoren auf. Dabei ist es besonders bevorzugt, dass mindestens zwei Abstandssensoren im Wesentlichen in einer Richtung messen, wodurch die Erfassungsgenauigkeit der Position einer Werkstückoberfläche weiter verbessert wird. Alternativ oder zusätzlich ist es gemäß einer Weiterbildung der Erfindung besonders bevorzugt, dass mindestens zwei Abstandssensoren in voneinander abweichenden Richtungen messen. Hierdurch können beispielsweise Übergangsbereiche wie etwa Ecken oder Kanten besonders zuverlässig erfasst werden, wodurch sich die Werkstückqualität weiter steigern lässt. Darüber hinaus ist gemäß einer Weiterbildung der Erfindung vorgesehen, dass der mindestens eine berührungslose Abstandssensor eine Messgenauigkeit von +/-0,05 mm oder genauer besitzt, wodurch sich nochmals eine erhebliche Steigerung der Werkstückqualität erzielen lässt. Alternativ oder zusätzlich weist der mindestens eine berührungslose Abstandssensor gemäß einer Weiterbildung der Erfindung einen Messabstand zum Werkstück von höchstens 300 mm auf. So haben die Erfinder festgestellt, dass berührungslose Abstandssensoren in diesem Abstandsbereich besonders präzise und reproduzierbare Messergebenisse liefern und dabei auch in der Lage sind, diese auch bei wechselnden Werkstückoberflächen bereitzustellen.

Gemäß einer Weiterbildung der Erfindung weist mindestens eine Bearbeitungsanordnung mindestens eine Positionierachse zum Positionieren der Bearbeitungsanordnung in Bezug auf das Werkstück auf. Auf diese Weise lässt sich die Bearbeitungsanordnung präzise und schnell in die gewünschte Bearbeitungsposition einstellen, sodass sich die gewünschte hohe Werkstückqualität in einem zügigen und automatisierbaren Bearbeitungsprozess ergibt. Dabei ist es besonders bevorzugt, dass die mindestens eine Positionierachse eine Positionsgenauigkeit von +/- 0,05 mm oder genauer besitzt. Dies führt zu hervorragenden Bearbeitungsergebnissen.

Darüber hinaus weist die Bearbeitungsvorrichtung gemäß einer Weiterbildung der Erfindung eine Kalibrieranordnung zum Kalibrieren mindestens eines Abstandssensors auf. Hierdurch wird sichergestellt, dass der mindestens eine Abstandssensor auch unter den oft rauen und verschmutzungsanfälligen Umgebungsbedingungen stets eine ausreichende Messgenauigkeit liefert, sodass die gewünschte Werkstückqualität zuverlässig erreicht werden kann.

Alternativ oder zusätzlich ist gemäß einer Weiterbildung der Erfindung vorgesehen, dass die Vorrichtung ferner eine Überprüfungsanordnung zum Überprüfen des Betriebszustandes, insbesondere des Verschmutzungsgrades mindestens eines Abstandssensors aufweist. Auch auf diese Weise kann ein erheblicher Beitrag zur Aufrechterhaltung der Messgenauigkeit des mindestens einen Abstandssensors geleistet werden, um dauerhaft die Werkstückqualität sicherzustellen, wobei die vorstehend genannte Kalibrieranordnung und die Überprüfungsanordnung gegebenenfalls auch durch eine einzelne Einheit zur Kalibrierung und Überprüfung gebildet sein können.

Darüber hinaus weist die Bearbeitungsvorrichtung gemäß einer Weiterbildung der Erfindung eine elektronische Steuereinheit auf, die bevorzugt eingerichtet ist, mindestens eine Positionierachse mindestens einer Bearbeitungsanordnung auf der Grundlage des Erfassungsergebnisses mindestens eines Abstandssensors zu steuern. Durch diese Ausgestaltung wird die Bearbeitungsvorrichtung in die Lage versetzt, ohne Benutzereingriff kontinuierlich eine zügige Werkstückbearbeitung mit höchster Qualität durchzuführen.

Obgleich im Rahmen der Erfindung für bestimmte Zwecke auch berührungsbehaftete Tastelemente zum Einsatz kommen können, ist es insgesamt bevorzugt, dass die Bearbeitungsvorrichtung frei ist von Tastelementen, welche das Werkstück zwecks Positionierung mindestens einer Bearbeitungsanordnung berühren. Hierdurch lassen sich Beschädigungen oder Verschmutzungen der Werkstückoberfläche vermeiden, während die berührungslosen Abstandssensoren der vorliegenden Erfindung für die gewünschte hohe Werkstückqualität sorgen.

Die Bearbeitungsanordnung kann im Rahmen der Erfindung auf unterschiedliche Art und Weise ausgestaltet sein, wobei unter Bearbeitung allgemein das Vornehmen einer Veränderung zumindest an der Oberfläche des Werkstücks zu verstehen ist.

Als besonders vorteilhaft hat sich das erfindungsgemäße Konzept erwiesen, wenn die Bearbeitungsanordnung eingerichtet ist, an dem Werkstück eine spanende Bearbeitung und/oder einen Beschichtungsvorgang durchzuführen. Bei diesen Bearbeitungen können die präzisen, berührungslosen Abstandssensoren der vorliegenden Erfindung ihren Vorteil hinsichtlich der Bearbeitungsqualität voll ausspielen.

Die vorstehend genannten Vorteile lassen sich besonders ausgeprägt bei einem Verfahren zum Bearbeiten eines Werkstücks nach Anspruch 1 erzielen.

Bei Durchführung des Verfahrens werden entlang der Oberfläche eines Werkstücks von mindestens einem Abstandssensor mehrere Messwerte aufgenommen, wobei Messwerte, deren betragsmäßige Abweichung gegenüber einem benachbarten Messwert einen vorbestimmten Schwellwert überschreitet, bei der Ermittlung einer Hilfsposition der Oberfläche des Werkstücks ignoriert werden. Auf diese Weise wird es möglich, Unstetigkeiten der Werkstückoberfläche wie etwa Nuten, Bohrlöcher oder dergleichen herauszufiltern, sodass diese keinen negativen Einfluss auf die Bearbeitung der Werkstückoberfläche besitzen.

Gemäß einer Weiterbildung des Verfahrens ist ferner vorgesehen, dass entlang der Oberfläche eines Werkstücks von mindestens einem Abstandssensor mehrere Messwerte aufgenommen werden, aus denen anschließend ein Ersatzwert, insbesondere Mittelwert gebildet wird, auf dessen Grundlage die Ist-Position der Oberfläche des Werkstücks in Bezug zu der Bearbeitungsanordnung bestimmt wird. Auf diese Weise lassen sich Unstetigkeiten und Toleranzen des zu bearbeitenden Werkstücks zumindest teilweise glätten, sodass sich ein kontinuierlicher Bearbeitungsverlauf ergibt, der einen wesentlichen Beitrag zu einer hohen Werkstückqualität liefert.

### Kurze Beschreibung der Zeichnungen

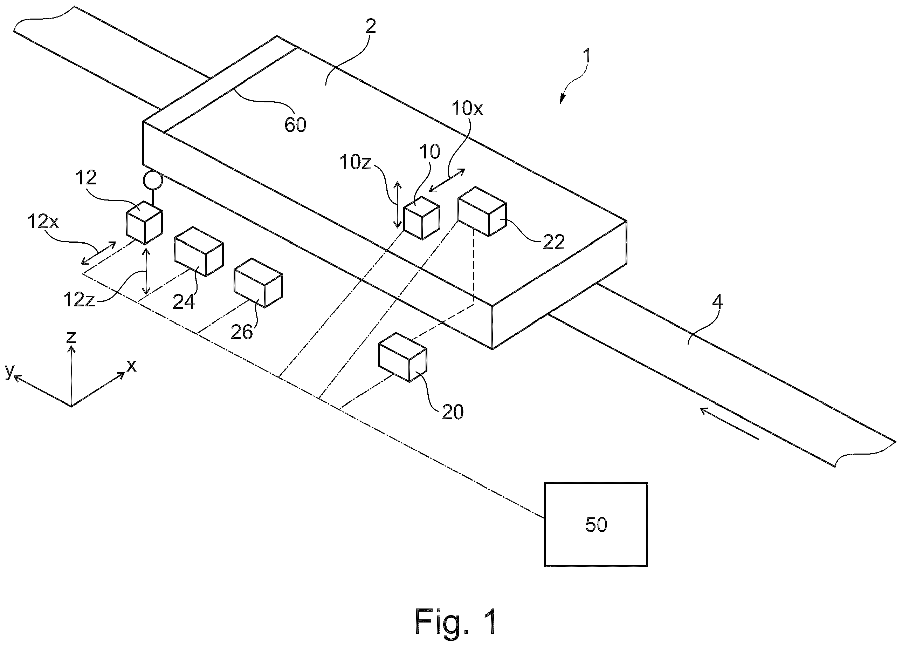

Fig. 1 zeigt schematisch eine Perspektivansicht einer Ausführungsform einer Bearbeitungsvorrichtung.

### Ausführliche Beschreibung bevorzugter Ausführungsformen

Bevorzugte Ausführungsformen der Erfindung werden nachfolgen ausführlich unter Bezugnahme auf die begleitende Zeichnung beschrieben.

Die Bearbeitungsvorrichtung 1 zum Bearbeiten eines Werkstücks 2 ist in Fig. 1 schematisch in einer Perspektivansicht dargestellt. Die Bearbeitungsvorrichtung 1 dient in der vorliegenden Ausführungsform zum Bearbeiten eines Werkstücks, das zumindest abschnittsweise aus Holz, Holzwerkstoffen, Kunststoff oder dergleichen besteht. Derartige Werkstücke kommen im Bereich der Möbel- und Bauelementeindustrie verbreitet zum Einsatz, obgleich die vorliegende Erfindung nicht hierauf beschränkt ist.

Die Bearbeitungsvorrichtung 1 umfasst in der vorliegenden Ausführungsform zwei Bearbeitungsanordnungen 10 und 12, bei denen es sich beispielsweise um sogenannte Bündigfräsaggregate handeln kann. Mittels derartiger Aggregate wird üblicherweise der überstehende Abschnitt einer an das Werkstück 2 gefügten Kante (in Fig. 1 nicht gezeigt) bündig gefräst. Es ist jedoch zu beachten, dass auch grundlegend andersartige Bearbeitungsanordnungen zum Einsatz kommen können, die beispielsweise andere spanende Bearbeitungen ausführen oder ein Beschichtungsmaterial auf die Oberfläche des Werkstücks aufbringen.

Die Bearbeitungsanordnungen 10, 12 besitzen in der vorliegenden Ausführungsform jeweils zwei Positionierachsen 10x, 10z, 12x, 12z, mittels derer die Bearbeitungsanordnungen 10, 12 in Bezug auf das Werkstück 2 jeweils in Richtung der in Fig. 1 gezeigten Richtungen X und Z positioniert werden können. Dabei können die Positionierachsen 10x, 10z, 12x, 12z beispielsweise eine Positioniergenauigkeit von +/- 0,01 mm aufweisen.

Ferner umfasst die Bearbeitungsvorrichtung 1 eine Förderanordnung 4, die in der vorliegenden Ausführungsform als Durchlaufförderanordnung wie etwa Förderband, Förderkette, Förderriemen oder dergleichen ausgestaltet ist. Es ist jedoch zu beachten, dass die Förderanordnung 4 auch dazu eingerichtet sein kann, die Bearbeitungsanordnungen 10 und 12 zu bewegen und das Werkstück 2 stationär zu halten. Auch Mischformen beider Konzepte sind möglich, wobei die Förderanordnung 4 dann stets die Aufgabe hat, eine Relativbewegung zwischen mindestens einer Bearbeitungsanordnung 10, 12 und dem Werkstück 2 herbeizuführen.

Darüber hinaus umfasst die Bearbeitungsvorrichtung 1 in der vorliegenden Ausführungsform insgesamt vier berührungslose Abstandssensoren 20, 22, 24 und 26. Diese sind jeweils eingerichtet, einen Abstand zu einer Oberfläche des Werkstücks 2 zu messen und sind in der vorliegenden Ausführungsform als Lasertriangulationssensoren ausgestattet. Die Messgenauigkeit der Lasertriangulationssensoren beträgt in der vorliegenden Ausführungsform +/- 0,001 mm, obgleich die vorliegende Erfindung nicht hierauf beschränkt ist. Die Abstandssensoren 20, 22, 24, 26 sind in der vorliegenden Ausführungsform in Durchlaufrichtung ca. 200 mm vor dem Bearbeitungspunkt des jeweiligen Werkzeugs angeordnet und sind dabei beispielsweise ca. 20 mm von der zu erfassenden Oberfläche des Werkstücks entfernt, um die gewünschte Messgenauigkeit erzielen zu können und darüber hinaus auch bei wechselnden Werkstückoberflächen zuverlässige Messergebnisse für den Abstand zu liefern.

Wie in Fig. 1 zu erkennen ist, weisen in der vorliegenden Ausführungsform die beiden Abstandssensoren 20 und 24 im Wesentlichen in eine Richtung, nämlich in der in Fig. 1 angegebenen X-Richtung, und die beiden Abstandssensoren 22 und 26 weisen ebenfalls im Wesentlichen in eine Richtung, nämlich in die in Fig. 1 angegebenen Z-Richtung. Darüber hinaus weisen die beiden Abstandssensoren 20 und 22 in voneinander unterschiedlichen Richtungen, nämlich in der vorliegenden Ausführungsform orthogonal zueinander, obgleich je nach Anforderungen auch andere Winkel möglich sind. Ebenso weisen die beiden Abstandssensoren 24 und 26 in voneinander unterschiedlichen Richtungen, nämlich in der vorliegenden Ausführungsform ebenfalls orthogonal zueinander. Dabei sind die Abstandssensoren 20, 22, 24, 26 derart angeordnet, dass sie das auf der Förderanordnung 4 beförderte Werkstück 2 in dessen Rand- bzw. Eckbereich berührungslos abtasten, was durch die Kombination von parallel und orthogonal zueinander angeordneten Abstandssensoren besonders effektiv möglich ist. Auch ein flächiges oder scannendes Abtasten ist möglich.

Um die Messgenauigkeit der berührungslosen Abstandssensoren 20, 22, 24, 26 dauerhaft sicherzustellen, umfasst die Bearbeitungsvorrichtung 1 eine nicht näher gezeigte Kalibrieranordnung zum Kalibrieren der Abstandssensoren. Diese kann beispielsweise eine Referenzfläche oder ein Referenzwerkstück umfassen, die bzw. das von den Abstandssensoren vermessen werden kann und deren Abstand zu den Abstandssensoren genau bekannt ist. Die Referenzfläche kann beispielsweise ein Abschnitt der Bearbeitungsvorrichtung 1 sein, der von den Abstandssensoren 20, 22, 24, 26 vermessen werden kann, wenn gerade kein Werkstück 2 im Messbereich der Abstandssensoren liegt. Dabei kann die Kalibrieranordnung gleichzeitig auch als Überprüfungsanordnung zum Überprüfen des Betriebszustandes wie etwa des Verschmutzungsgrades der Abstandssensoren dienen, wobei jedoch auch eine separate Überprüfungsanordnung wie beispielsweise eine Kamera oder dergleichen vorgesehen sein kann. Darüber hinaus kann die Bearbeitungsvorrichtung 1 auch eine Reinigungseinheit zum Reinigen der Abstandssensoren umfassen, wie etwa eine Abblasdüse, einen Wischer oder dergleichen.

Weiterhin umfasst die Bearbeitungsvorrichtung 1 in der vorliegenden Ausführungsform eine elektronische Steuereinheit 50, die sowohl mit den Abstandssensoren 20, 22, 24, 26 als auch mit den Positionierachsen 10x, 10z, 12x, 12z verbunden ist. Dabei dient die elektronische Steuereinheit 50 dazu, die Erfassungsergebnisse der Abstandssensoren 20, 23, 24, 26 kontinuierlich abzufragen und auf dieser Grundlage die Positionierachsen 10x, 10z, 12x, 12z derart anzusteuern, dass sie in die gewünschte Relativposition zur Bearbeitung des Werkstücks 4 gebracht werden.

Der Betrieb der in Fig. 1 gezeigten Bearbeitungsvorrichtung 1 vollzieht sich dann beispielsweise wie folgt. Ein zu bearbeitendes Werkstück 2 wird mittels der Förderanordnung 4 in der mit einem Pfeil gekennzeichneten Durchlaufrichtung eingefördert. Sobald das Werkstück 4 den Bereich der Abstandssensoren 20, 22 erreicht, wird der Abstand zu der Oberfläche des Werkstücks 2 unter Einsatz der Abstandssensoren 20, 22 gemessen. Anhand der Messwerte wird die Ist-Position der Oberfläche des Werkstücks in Bezug zu der Bearbeitungseinrichtung 10 ermittelt, und zwar in der elektronischen Steuereinheit 50. Anschließend sorgt die elektronische Steuereinheit 50 dafür, dass die Bearbeitungsanordnung 10 unter Berücksichtigung von in der Steuereinheit 50 hinterlegten oder eingespeisten Bearbeitungsdaten unter Einsatz der Positionierachsen 10x und 10z in eine Soll-Position eingestellt wird, in welcher das gewünschte Bearbeitungsergebnis erzielt werden kann. Anschließend erfolgt die Bearbeitung des Werkstücks 2 durch die Bearbeitungseinheit 10 im Bereich der oberen Längskante des Werkstücks 2.

Anschließend erreicht das Werkstück 2 die Abstandssensoren 24 und 26 sowie die Bearbeitungseinheit 12, wo sich der vorstehend beschriebene Vorgang sinngemäß wiederholt mit dem Unterschied, dass die untere Längskante des Werkstücks 2 bearbeitet wird. Es ist jedoch ebenso möglich, dass obere und untere Längskante simultan bearbeitet werden.

Eine Besonderheit bei der Aufnahme und Auswertung von Messwerten durch die Abstandssensoren 20, 22, 24, 26 liegt darin, dass stets mehrere Messwerte aufgenommen werden und anschließend in der elektronischen Steuereinheit 50 eine spezielle Auswertung stattfindet, mit der beispielsweise Singularitäten kompensiert werden können. So weist das Werkstück 2 in der vorliegenden Ausführungsform beispielsweise eine Quernut 60 auf, die einige Millimeter breit und tief sein kann. Die Tiefe der Nut 60 überschreitet somit einen Schwellwert, der beispielsweise im Bereich von 100stel oder 10tel Millimeter definiert sein kann. Dies führt dazu, dass Messwerte, die im Bereich der Nut 60 durch die Abstandssensoren 20 und 22 aufgenommen werden, bei der Ermittlung der Ist-Position des Werkstücks 2 in der Steuereinheit 50 ignoriert werden. Somit wird das gewünschte Bündigfräsen im Bereich der Längskante des Werkstücks 2 nicht durch die Unstetigkeit (Nut 60) beeinträchtigt, wodurch die gewünschte hohe Werkstückqualität erzielt werden kann.

Eine weitere, gezielte Auswertung der aufgenommenen Messwerte in der elektronischen Steuereinheit 50 kann darin bestehen, dass aus den mehreren aufgenommenen Messwerten ein Ersatzwert wie insbesondere ein Mittelwert gebildet wird. So können beispielsweise stets mehrere Messwerte zusammengefasst, gemeinsam ausgewertet und zu einem Ersatz- bzw. Mittelwert zusammengefasst werden. Anschließend wird erst auf der Grundalge dieses Ersatzwerts die tatsächliche Bearbeitung ausgeführt. Versuche der Erfinder haben gezeigt, dass sich hierdurch eine deutlich kontinuierlichere Bearbeitung ergibt, die weniger durch Toleranzen und kleinere Singularitäten des jeweiligen Werkstücks 2 beeinflusst wird.

## Patentansprüche

1. Verfahren zum Bearbeiten eines Werkstücks, das bevorzugt zumindest abschnittsweise aus Holz, Holzwerkstoffen, Kunststoff oder dergleichen besteht, unter Einsatz einer Vorrichtung, zum Bearbeiten eines Werkstücks (2), das bevorzugt zumindest abschnittsweise aus Holz, Holzwerkstoffen, Kunststoff oder dergleichen besteht, umfassend:
mindestens eine Bearbeitungsanordnung (10, 12) zum Bearbeiten des Werkstücks (2),
eine Förderanordnung (4) zum Herbeiführen einer Relativbewegung zwischen mindestens einer Bearbeitungsanordnung (10, 12) und dem Werkstück (2),
mindestens einen berührungslosen Abstandssensor (20, 22, 24, 26), der eingerichtet ist, einen Abstand zu einer Oberfläche des Werkstücks (2) zu messen,
wobei
der mindestens einen berührungslose Abstandssensor (20, 22, 24, 26) eingerichtet ist, den Abstand mit einer Messgenauigkeit von +/- 0,01 mm oder genauer zu messen, und/oder einen Triangulationssensor aufweist,
mit den Schritten:
Messen des Abstands zu der Oberfläche des Werkstücks (2) unter Einsatz des mindestens einen berührungslosen Abstandssensors (20, 22, 24, 26),
Ermitteln einer Istposition der Oberfläche des Werkstücks (2) in Bezug zu der Bearbeitungsanordnung (10, 12) anhand des gemessenen Abstands,
Einstellen einer Sollposition der Bearbeitungsanordnung (10, 12) unter Berücksichtigung von Bearbeitungsdaten, und
Bearbeiten des Werkstücks (2) im Bereich der Oberfläche,
**dadurch gekennzeichnet, dass** entlang der Oberfläche des Werkstücks (2) von dem mindestens einem Abstandssensor (20, 22, 24, 26) mehrere Messwerte aufgenommen werden, wobei Messwerte, deren betragsmäßige Abweichung gegenüber einem benachbarten Messwert einen vorbestimmten Schwellwert überschreitet, bei der Ermittlung einer Istposition der Oberfläche des Werkstücks (2) ignoriert werden.

2. Verfahren nach Anspruch 1, bei dem entlang der Oberfläche eines Werkstücks (2) von mindestens einem Abstandssensor (20, 22, 24, 26) mehrere Messwerte aufgenommen werden, aus denen anschließend ein Ersatzwert, insbesondere Mittelwert, gebildet wird, auf dessen Grundlage die Istposition der Oberfläche des Werkstücks (2) in Bezug zu der Bearbeitungsanordnung bestimmt wird.

3. Verfahren nach einem der vorhergehenden Ansprüche, bei dem der Triangulationssensor einen Lasertriangulationssensor aufweist.

4. Verfahren nach einem der vorhergehenden Ansprüche, bei dem mindestens zwei berührungslose Abstandssensoren (20, 22, 24, 26) vorgesehen sind, wobei bevorzugt mindestens zwei Abstandssensoren (20, 24; 22, 26)) im Wesentlichen in einer Richtung messen und/oder mindestens zwei Abstandssensoren (20, 22; 24, 26) in voneinander abweichenden Richtungen messen.

5. Verfahren nach nach einem der vorhergehenden Ansprüche, bei dem der mindestens eine berührungslose Abstandssensor (20, 22, 24, 26) eine Messgenauigkeit von mindestens +/-0,05 mm oder genauer und/oder einen Messabstand zum Werkstück (2) von höchstens 300 mm besitzt.

6. Verfahren nach einem der vorhergehenden Ansprüche, bei dem die mindestens eine Bearbeitungsanordnung (10, 12) mindestens eine Positionierachse (10x, 10z, 12x, 12z) zum Positionieren der Bearbeitungsanordnung (10, 12) in Bezug auf das Werkstück (2) aufweist, die bevorzugt eine Positionsgenauigkeit von +/-0,05 mm oder genauer besitzt.

7. Verfahren nach einem der vorhergehenden Ansprüche, wobei die Vorrichtung ferner eine Kalibrieranordnung zum Kalibrieren mindestens eines Abstandssensors aufweist.

8. Verfahren nach einem der vorhergehenden Ansprüche, wobei die Vorrichtung ferner eine Überprüfungsanordnung zum Überprüfen des Betriebszustandes, insbesondere des Verschmutzungsgrades mindestens eines Abstandssensors aufweist.

9. Verfahren nach einem der vorhergehenden Ansprüche, wobei die Vorrichtung ferner eine elektronische Steuereinheit (50) aufweist, die bevorzugt eingerichtet ist, mindestens eine Positionierachse (10x, 10z, 12x, 12z) mindestens einer Bearbeitungsanordnung (10, 12) auf der Grundlage des Erfassungsergebnisses mindestens eines Abstandssensors (20, 22, 24, 26) zu steuern.

10. Verfahren nach einem der vorhergehenden Ansprüche, wobei die Vorrichtung frei ist von Tastelementen, welche das Werkstück (2) zwecks Positionierung mindestens einer Bearbeitungsanordnung (10, 12) berühren.

11. Verfahren nach einem der vorhergehenden Ansprüche, bei dem die Bearbeitungsanordnung (10, 12) eingerichtet ist, an dem Werkstück eine spanende Bearbeitung und/oder einen Beschichtungsvorgang durchzuführen.

## Claims

1. Method for machining a workpiece, preferably consisting at least partially of wood, wood-based materials, plastic or the like, using a device for machining a workpiece (2) preferably consisting at least partially of wood, wood-based materials, plastic or the like, comprising:
at least one machining arrangement (10, 12) for machining the workpiece (2),
a conveying arrangement (4) for bringing about a relative movement between at least one machining arrangement (10, 12) and the workpiece (2),
at least one contactless distance sensor (20, 22, 24, 26) which is configured to measure a distance from a surface of the workpiece (2),
wherein
the at least one contactless distance sensor (20, 22, 24, 26) is configured to measure the distance with a measurement accuracy of +/- 0.01 mm or more precisely, and/or has a triangulation sensor,
with the steps:
measuring the distance from the surface of the workpiece (2) using the at least one contactless distance sensor (20, 22, 24, 26),
determining an actual position of the surface of the workpiece (2) in relation to the machining arrangement (10, 12) based on the measured distance,
setting a target position of the machining arrangement (10, 12) taking into account machining data, and
machining the workpiece (2) in the region of the surface,
**characterised in that** several measured values are recorded along the surface of the workpiece (2) by the at least one distance sensor (20, 22, 24, 26), wherein measured values whose deviation in magnitude from a neighbouring measured value exceeds a predetermined threshold value are ignored when determining an actual position of the surface of the workpiece (2).

2. Method according to claim 1, wherein several measured values are recorded along the surface of a workpiece (2) by at least one distance sensor (20, 22, 24, 26), from which a substitute value, in particular the mean value, is then formed, on the basis of which the actual position of the surface of the workpiece (2) in relation to the machining arrangement is determined.

3. Method according to one of the preceding claims, wherein the triangulation sensor comprises a laser triangulation sensor.

4. Method according to one of the preceding claims, wherein at least two contactless distance sensors (20, 22, 24, 26) are provided, wherein at least two distance sensors (20, 24; 22, 26) preferably measure substantially in one direction and/or at least two distance sensors (20, 22; 24, 26) measure in different directions.

5. Method according to one of the preceding claims, wherein at least one contactless distance sensor (20, 22, 24, 26) has a measurement accuracy of at least +/- 0.05 mm or greater and/or a measuring distance from the workpiece (2) of no more than 300 mm.

6. Method according to one of the preceding claims, wherein which at least one machining arrangement (10, 12) has at least one positioning axis (10x, 10z, 12x, 12z) for positioning the machining arrangement (10, 12) relative to the workpiece (2) which preferably has a positional accuracy of +/-0.05 mm or greater.

7. Method according to one of the preceding claims, wherein the device also has a calibration arrangement for calibrating at least one distance sensor.

8. Method according to one of the preceding claims, wherein the device also has a checking arrangement for checking the operating condition, in particular the degree of soiling, of at least one distance sensor.

9. Method according to one of the preceding claims, wherein the device also has an electronic control unit (50) which is preferably configured to control at least one positioning axis (10x, 10z, 12x, 12z) of at least one machining arrangement (10, 12) based on the sensing result of at least one distance sensor (20, 22, 24, 26).

10. Method according to one of the preceding claims, wherein the device is free of tactile elements touching the workpiece (2) for the purpose of positioning at least one machining arrangement (10, 12).

11. Method according to one of the preceding claims, wherein the machining arrangement (10, 12) is configured to carry out a machining and/or coating operation on the workpiece.

## Revendications

1. Procédé d'usinage d'une pièce à usiner qui se compose de préférence au moins par sections de bois, de matériaux dérivés du bois, de matière plastique ou similaires, en utilisant un dispositif, pour l'usinage d'une pièce à usiner (2), qui se compose de préférence au moins par sections de bois, de matériaux dérivés du bois, de matière plastique ou similaires, comprenant :
au moins un agencement d'usinage (10, 12) pour l'usinage de la pièce à usiner (2),
un agencement de transport (4) pour entraîner un mouvement relatif entre au moins un agencement d'usinage (10, 12) et la pièce à usiner (2),
au moins un capteur de distance (20, 22, 24, 26) sans contact qui est conçu afin de mesurer une distance par rapport à une surface de la pièce à usiner (2),
dans lequel
l'au moins un capteur de distance (20, 22, 24, 26) sans contact est conçu afin de mesurer la distance avec une précision de mesure de +/- 0,01 mm ou plus précisément, et/ou présente un capteur de triangulation,
avec les étapes suivantes :
la mesure de la distance par rapport à la surface de la pièce à usiner (2) en utilisant l'au moins un capteur de distance (20, 22, 24, 26) sans contact,
la détermination d'une position réelle de la surface de la pièce à usiner (2) en ce qui concerne l'agencement d'usinage (10, 12) à l'aide de la distance mesurée,
le réglage d'une position de consigne de l'agencement d'usinage (10, 12) en tenant compte de données d'usinage, et
l'usinage de la pièce à usiner (2) dans la zone de la surface,
**caractérisé en ce que** plusieurs valeurs de mesure sont prises le long de la surface de la pièce à usiner (2) par l'au moins un capteur de distance (20, 22, 24, 26),
dans lequel des valeurs de mesure, dont l'écart chiffré dépasse par rapport à une valeur de mesure contiguë une valeur seuil prédéterminée, sont ignorées lors de la détermination d'une position réelle de la surface de la pièce à usiner (2).

2. Procédé selon la revendication 1, pour lequel le long de la surface d'une pièce à usiner (2), plusieurs valeurs de mesure sont prises par au moins un capteur de distance (20, 22, 24, 26), à partir desquelles ensuite une valeur de remplacement, en particulier une valeur moyenne, est formée, sur la base de laquelle la position réelle de la surface de la pièce à usiner (2) est déterminée en ce qui concerne l'agencement d'usinage.

3. Procédé selon l'une quelconque des revendications précédentes, pour lequel le capteur de triangulation présente un capteur de triangulation laser.

4. Procédé selon l'une quelconque des revendications précédentes, pour lequel au moins deux capteurs de distance (20, 22, 24, 26) sans contact sont prévus, dans lequel de préférence au moins deux capteurs de distance (20, 24 ; 22, 26) mesurent sensiblement dans un sens et/ou au moins deux capteurs de distance (20, 22 ; 24, 26) mesurent dans des sens différents l'un de l'autre.

5. Procédé selon l'une quelconque des revendications précédentes, pour lequel le au moins un capteur de distance (20, 22, 24, 26) sans contact possède une précision de mesure d'au moins + /- 0,05 mm ou plus précisément et/ou une distance de mesure par rapport à la pièce à usiner (2) de 300 mm au plus.

6. Procédé selon l'une quelconque des revendications précédentes, pour lequel l'au moins un agencement d'usinage (10, 12) présente au moins un axe de positionnement (10x, 10z, 12x, 12z) pour le positionnement de l'agencement d'usinage (10, 12) en ce qui concerne la pièce à usiner (2) qui possède de préférence une précision de position de +/-0,05 mm ou plus précisément.

7. Procédé selon l'une quelconque des revendications précédentes, dans lequel le dispositif présente de plus un agencement d'étalonnage pour l'étalonnage au moins d'un capteur de distance.

8. Procédé selon l'une quelconque des revendications précédentes, dans lequel le dispositif présente de plus un agencement de vérification pour la vérification de l'état de fonctionnement, en particulier du degré de salissure au moins d'un capteur de distance.

9. Procédé selon l'une quelconque des revendications précédentes, dans lequel le dispositif présente de plus un dispositif de commande (50) électronique qui est de préférence conçu afin de commander au moins un axe de positionnement (10x, 10z, 12x, 12z) au moins d'un agencement d'usinage (10, 12) sur la base du résultat de détection au moins d'un capteur de distance (20, 22, 24, 26).

10. Procédé selon l'une quelconque des revendications précédentes, dans lequel le dispositif est exempt d'éléments palpeurs qui touchent la pièce à usiner (2) en vue du positionnement au moins d'un agencement d'usinage (10, 12).

11. Procédé selon l'une quelconque des revendications précédentes, pour lequel l'agencement d'usinage (10, 12) est conçu afin de réaliser un usinage par enlèvement de copeaux et/ou un processus de revêtement au niveau de la pièce à usiner.
